(19) **Europäisches Patentamt**

**European Patent Office**

**Office européen des brevets**

(11) **EP 0 861 780 B1**

(12) **EUROPÄISCHE PATENTSCHRIFT**

(45) Veröffentlichungstag und Bekanntmachung des Hinweises auf die Patenterteilung:
**31.03.2004 Patentblatt 2004/14**

(51) Int Cl.[7]: **B64D 1/14**

(21) Anmeldenummer: **98100353.6**

(22) Anmeldetag: **12.01.1998**

(54) **Verfahren zur Verhinderung des Überschlagens bei der Landung eines Luft- oder Raumfahrtgerätes**

Roll-over preventing method during landing for an air or space vehicle

Méthode pour empecher le retournement à l'atterrissage d'un véhicule aérien ou spatial

(84) Benannte Vertragsstaaten:
**DE FR GB**

(30) Priorität: **28.02.1997 DE 19708159**

(43) Veröffentlichungstag der Anmeldung:
**02.09.1998 Patentblatt 1998/36**

(73) Patentinhaber: **EADS Space Transportation GmbH**
**28199 Bremen (DE)**

(72) Erfinder:
• **Menne, Stefan, Dr.**
**83059 Kolbermoor (DE)**
• **Ovadya, Yasar, Ing.**
**82024 Taufkirchen (DE)**
• **Schmidt, Bernhard, Dipl.-Ing.**
**82008 Unterhaching (DE)**
• **Wagner, Adalbert, Dipl.-Ing.**
**83739 Radthal (DE)**

(74) Vertreter: **Ulrich, Thomas et al**
**EADS Deutschland GmbH**
**Patentabteilung**
**LG-SP**
**81663 Ottobrunn (DE)**

(56) Entgegenhaltungen:
FR-A- 1 237 871     US-A- 2 712 913
US-A- 2 840 194

**Beschreibung**

Die vorliegende Erfindung betrifft ein Verfahren zur Verhinderung des Überschlagens bei der Landung eines Luft- oder Raumfahrtgerätes, insbesondere einer bemannten oder unbemannten Kapsel oder eines Lenkflugkörpers nach dem Oberbegriff des Patentanspruchs 1.

Aus der DE-A-30 24 551 ist ein Landestoß-Dämpfungssystem für aus dem Luftraum zurückkehrende Lastkörper bekannt, bei dem gasgefüllte Dämpfungsglieder aus nachgiebigem Werkstoff verwendet werden, die beim Nichtbedarf zusammengefaltet und sich während des Entfaltens selbsttätig durch Einsaugen mit Umgebungsluft füllen, wobei sich die Luftfüllung vom Auftreffen des gesamten Systems auf die Erde kurzzeitig verdichtet und über Ventile ausgeblasen wird.

Die DE-A-41 18 300 offenbart ein Prallkissen mit mindestens einer Druckentladungsöffnung, die bei einem vorgegebenen bestimmten Überdruck selbsttätig öffnet und für einen Druckabbau im Prallkissen ein Druckanstieg bewirkt, um einen Rückschnelleffekt zu verhindern.

Aus der DE-C-33 23 348 ist ein Landestoßdämpfer für Flugkörper bekannt, deren Sinkgeschwindigkeit beim Landevorgang durch einen Bremsfallschirm bestimmt wird und deren Aufprall auf den Boden durch den Einsatz von Landekissen in Form von aufblasbaren Schläuchen reduziert wird. Das Landekissen umfaßt dabei eine plastisch verformbare Schlauchfolie, deren eines Ende eingestülpt und durch das andere Ende durchgezogen ist, so dass zwischen den Wandungen der ineinander gesteckten Enden eine Öffnung zum Einleiten eines Druckgases entsteht.

Dabei können mindestens zwei Schlauchfolien ineinander gesteckt angeordnet sein, wobei zwischen den Wandungen aller ineinander gesteckten Enden Öffnung zum Einleiten von Druckgas angeordnet sind und wobei der Füllgrad der einzelnen Schlauchfolien über Ventilelemente unterschiedlich z. B. temperaturabhängig einstellbar ist. Dieses Prallkissen bietet dadurch eine erhöhte Seitenstabilität, das die der Bewegung abgewandte Seite des Prallkissens beim Aufprall gestrafft wird, so dass ein Ausweichen der der Bewegung zugewandten Seite verhindert wird.

In der US-A-2 840 194 ist ein Luftkissen zur Schock-Absorption offenbart, das aus sechs Kammern ("compartments") gebildet wird Jede Kammer ist separat be- oder entlüftbar. Über Auslassventile wird der Maximaldruck in den Kammern begrenzt. Außerdem erlauben diese eine Entlüftung der Kammern aufgrund der bei der Landung durch den Landestoß auftretenden Druckerhöhung in den Kammern. Dadurch wird der Landestoß gedämpft.

FR-A-1 237 871 offenbart ein Luftkissen zur Dämpfung von mit Fallschirmen abgeworfenen Lasten, welches in mehrere Kammern unterteilt ist und bei dem die Trennwand einen Luftaustausch zwischen den Kammer zulässt. Beim Auftreffen des Luftkissens auf den Boden wird somit Luft von der Kammer, die zuerst den Boden berührt, in die Kammer bzw. Kammern, die den Boden noch nicht oder nur leicht berührt bzw. berühren, gepumpt. Hierdurch wird der Aufprall stark abgedämpft. Dies führt allerdings in dem Fall zu Problemen, in dem die den Boden zuerst berührende Kammer eine in Bewegungsrichtung vorne liegende Kammer ist und ein Überschlagen der Last nicht verhindert wird.

Neben diesen bekannten Airbag-Systemen, die häufig bei Landungen von Fluggeräten, wie Kapseln, Paletten, Drohnen usw. an Fallschirmen, Ballonen oder Gleitschirmen eingesetzt werden, sind noch sogenannte Retrorockets bekannt, d. h. Landetriebwerke, welche kurzzeitig einen der Schwerkraft entgegenwirkenden Schub erzeugen und dadurch das bereffende Gerät unmittelbar der Bodenberührung abbremsen. Jedoch sind derartige Systeme mit dem zugehörigen Treibstoffsystem technisch aufwendig, weisen einen nicht unerheblichen Platzbedarf auf und erhöhen spürbar die Masse des Luft- oder Raumfahrtgeräts.

Demgegenüber bietet die Verwendung von Airbag-Landestoss-Dämpfungssystemen den Vorteil, dass sie relativ leicht sind, einfach im Aufbau und im inaktiven Zustand wenig Platz einnehmen. Nachteilig bei all den bekannten Airbag-Systemen ist jedoch noch, dass beim Aufprall der Luft- oder Raumfahrtgeräte mit den Airbag-Systemen in der Regel nicht nur vertikale Geschwindigkeitskomponenten gedämpft werden müssen, sondern auch horizontale Geschwindigkeitskomponenten, wie sie z.B. bei Gleitschirmen durch Wind- oder Gleitrichtungen hervorgerufen werden.

Als Airbag-Landestoss-Dämpfungssystem kommt ein gasgefüllter torus-ringförmiger oder rechteckförmiger Gasbehälter in Frage, der vor der Landung aufgeblasen wird. Beim Aufprall wird die gewünschte Dämpfungswirkung dadurch erreicht, dass ein Medium, mit dem das Airbag-Landestoss-Dämpfungssystem gefüllt wird, d.h. Luft oder ein anderes Gas während der eigentlichen Landung, d.h. bei Berührung des Bodens, in Abhängigkeit von der Sinkgeschwindigkeit, der Masse des Luft- oder Raumfahrtgerätes und der erwünschten Verzögerung abgeblasen wird. Dies kann durch Öffnen von geeigneten Ablassventilen erfolgen.

Die oben erwähnten horizontalen Geschwindigkeitskomponenten bei der Landung bedeuten jedoch ein hohes Überschlagrisiko des Flug- oder Raumfahrtgerätes, das insbesondere bei Missionen mit empfindlichen Messgeräten oder gar Passagierbeförderung zu vermeiden ist.

Aufgabe der vorliegenden Erfindung ist es, ein Verfahren und ein Airbag-Landestoß-Dämpfungssystem vorzuschlagen, mit dem das Überschlagen während der Landung mit Sicherheit verhindert wird.

Ausgehend von einem Verfahren der eingangs näher genannten Art erfolgt die Lösung dieser Aufgabe mit dem im kennzeichnenden Teil des Anspruchs 1 angegebenen Merkmalen; vorteilhafte Ausgestaltungen sind in den Unteransprüchen beschrieben.

Die Erfindung geht aus von der Erkenntnis, dass die kinetische Energie 1/2 mv$^2$ durch Kompression des Airbags in Druckenergie, d.h. in eine Druckerhöhung in den Kammern umgewandelt wird und dass durch die beim Bodenkontakt während der Landung auftretende Reibkraft

$$F_R = \mu \times F_N \ (F_N = \text{Normalkraft})$$

ein in -Y-Richtung wirkendes Moment aufgebaut wird, das bei genügend grosser horizontaler Geschwindigkeit Vx zum Überschlagen des Landekörpers und damit zu unerwünschten Beschädigungen und Deformationen des mit dem Airbag-Landestoss-Dämpfungssystem versehenen Flug- und Raumfahrtkörpers führt.

Um das Überschlagen zu vermeiden, ist dem in -Y-Richtung wirkenden Moment ein in entgegengesetzter Richtung, d.h. in +Y-Richtung wirkendes Moment entgegenzustellen, so dass ein Überschlagen bei der Landung verhindert wird.

Dieses in +Y-Richtung wirkende kompensierende Moment kann durch Ausnutzung der Kompressionsenergie und entsprechendes Ansteuern des Gaszustandes in den einzelnen Kammern realisiert werden. Für ein grösstmögliches kompensierendes Moment muss also der Druck in den in Flugrichtung versehen vorderen Kammern möglichst gross und in den hinteren Kammern möglichst klein sein.

Gleichzeitig muss nach Erreichen der maximalen Kompressionsarbeit das Gas aus den einzelnen Kammern ausströmen und zwar durch Öffnen der Auslassventile, um ein Zurückfedern des Luftoder Raumfahrtkörpers zu verhindern, d.h. es erfolgt eine Umsetzung von Kompressionsenergie in kinetische Energie und damit ein Zurückfedern.

Im folgenden wird die Erfindung anhand der Zeichnung näher erläutert, in der ein vorteilhaftes Ausführungsbeispiel dargestellt ist. Es zeigen:

Figur 1    eine Unteransicht eines torusförmigen, Airbag-Landestoss-Dämpfungssystems;

Figur 2    eine Seitenansicht dieses Airbag-Landestoss-Dämpfungssystems schematisch mit einem daran befestigten Luft- oder Raumflugkörper, und

Figur 3    einen teilweisen Querschnitt durch ein Ausströmventil.

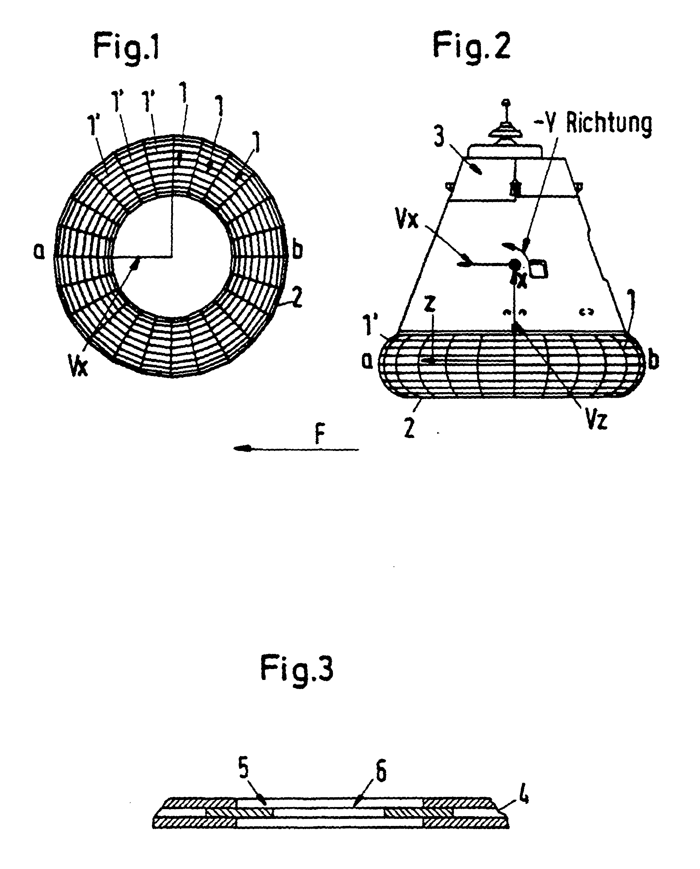

Figur 1 zeigt eine Unteransicht eines aufgeblasenen torusförmigen Airbag-Landestoss-Dämpfungssystems welches in eine Vielzahl von Kammern unterteilt ist, wobei die in Flugrichtung gesehen vorne liegenden Kammern mit 1' und die in Flugrichtung gesehen hinten liegenden Kammern mit 1 bezeichnet sind. Zur Verdeutlichung sind in Figuren 1 und 2 die in Flugrichtung F vorne liegenden Abschnitte mit a und die in Flugrichtung F hinten liegenden Abschnitte mit b bezeichnet.

In den beiden Figuren ist mit Vx die horizontale Geschwindigkeit bezeichnet, die ohne Kompensation zu einem Überschlagen des landenden Luft- oder Raumfahrtkörpers 3 führen kann.

Erfindungsgemäss wird nun vorgeschlagen, dass sämtliche Kammern 1, 1' des Airbag-Landestoss-Dämpfungssystems 2 vor der Landung mit dem gleichen Druck, z.B. einen um + 15 kPa erhöhten Umgebungsdruck beaufschlagt werden, wobei sämtliche Kammern mit Auslassventilen versehen sind. Im Falle eines Flug- oder Raumfahrtgerätes, welches sich ohne Vorzugsrichtung dem Erdboden nähert, beispielsweise eine an einem Fallschirm oder Ballon hängende Nutzlast, die keine Orientierung in horizontaler Richtung aufweist, können nun mittels Druckaufnehmern, Beschleunigungsaufnehmern (ähnlich wie beim Auto-Airbag) oder Berührungssensoren die entsprechenden Auslassventile angesteuert werden, wobei die Auslassventile vorzugsweise aktiv gesteuerte Ventile sind, die durch einen Auslöser, z.B. ein Pyroventil, angesteuert werden.

Erfindungsgemäss wird nun zur Verhinderung des Überschlagens eine derartige Ansteuerung der Auslassventile vorgenommen, dass ein Druckunterschied zwischen den in Flugrichtung F vorne liegenden Kammern 1' bezüglich den in Flugrichtung F hinten liegenden Kammern 1 dahingehend eingestellt wird, dass die vorne liegenden Kammern 1' einen höheren Druck bei der Landung aufweisen als die hinten liegenden Kammern 1. Dies kann durch verschiedene Massnahmen bei der Landung erreicht werden, insbesondere durch:

Öffnen der Auslassventile der hinteren Kammern 1 bereits bei einem geringerem Überdruck,

phasenverschobenes Öffnen der Auslassventile, d. h. dass die Auslassventile der hinteren Kammern 1 eher öffnen als die Auslassventile der vorderen Kammern,

Ansteuern einer kleineren Ausströmfläche in den Auslassventilen der vorderen Kammern gegenüber den Auslassventilen der hinteren Kammern, wobei z.B. in den vorderen Kammern nur ein Auslassventil geöffnet wird, während in den hinteren Kammern zwei (oder mehr) Auslassventile zur gleichen Zeit geöffnet werden.

Das erfindungsgemässe Airbag-Landestoss-Dämpfungssystem eignet sich jedoch genauso gut zur Aufprallminderung bei Luft- oder Raumfahrtgeräten mit Vorzugsrichtung. So weist z.B. die an einem Gleitschirm hängende Nutzlast grundsätzlich eine Orientierung in horizontaler Flugrichtung auf. Diese Landeorientierung ist von vornherein bekannt, d.h. dass das Gerät an einem Gleitschirm hängend mit bekannter Flugrichtung zum Boden zur Landung ansetzt; es ist auch möglich, die Vorzugsrichtung bereits vor der Landung festzustellen und z.B. durch eine Lageregelung oder auch eine Triebwerkssteuerung beizubehalten. In diesem Fall kann das Airbag-System optimiert werden.

Auch hierbei besteht das Airbag-Landestoss-Dämpfungssystem 2 aus mehreren Kammern 1, 1', wobei die Druckbeaufschlagung der einzelnen Kammern gemäss der Landeorientierung erfolgt. Jede Kammer ist wiederum mit Auslassventilen ausgestattet, die entweder mittels Druckaufnehmern, Beschleunigungsaufnehmern oder Berührungssensoren ausgelöst werden, sofern es sich um aktiv gesteuerte Auslassventile, z.B. Pyroventile, handelt oder aber bei einem bestimmten Überdruck ausgelöst, sofern es sich um passiv gesteuerte Auslassventile, z.B. solche mit Berstscheiben handelt.

Auch hier wird also ein Druckunterschied in den in Flugrichtung F gesehen vorne liegenden Kammern 1' dahingehend eingestellt, dass diese einen höheren Druck aufweisen, als die in Flugrichtung F hinten liegenden Kammern 1, die einen geringeren Druck aufweisen. Dies kann, wie oben beschrieben, während der Landung dadurch erfolgen, dass

die Auslassventile der hinteren Kammern 1 bei einem geringeren Überdruck öffnen als die Auslassventile der vorderen Kammern 1',

die Auslassventile phasenverschoben öffnen, d.h. dass die Auslassventile der hinteren Kammern eher öffnen als diejenigen der vorderen Kammern,

Einstellung eines kleineren Ausströmquerschnittes in den Auslassventilen der vorderen Kammern verglichen mit denjenigen der hinteren Kammern.

Eine Anpassung der Ausströmquerschnitte der Auslassventile 4 ist in Figur 3 dargestellt, wobei dort eine einstellbare Blende mit 5 bezeichnet ist, durch welche der Ausströmquerschnitt 6 für das Gas einstellbar ist.

Eine weitere Möglichkeit, das Überschlagen bei Luft- und Raumfahrtgeräten mit Vorzugsrichtung zu verhindern, besteht darin, bereits vor der Landung den Gasdruck in den vorderen Kammern 1' auf einen höheren Wert einzustellen als in den hinteren Kammern 1 oder aber für die vorderen Kammern 1' ein anderes Gas zu verwenden als in den hinteren Kammern 1, wobei z. B. für die vorderen Kammern Luft und für die hinteren Kammern Helium gewählt wird, wodurch verschiedene Ausströmgeschwindigkeiten durch die Auslassventile hindurch erreichbar sind.

Der Gasdruck kann auch durch zusätzliches Zünden von Gasgeneratoren im vorderen Bereich erhöht werden, die über die bekannten Massnahmen ausgelöst werden; entweder beim Aufprall oder kurz vorher nach Feststellung der Landeorientierung.

## Patentansprüche

1. Verfahren zur Verhinderung des Überschlagens bei der Landung eines Luftoder Raumfahrtgerätes mit Hilfe eines Airbag-Landestoß-Dämpfungssystems, welches vor der Landung mit Gas aufgeblasen wird und aus dem während der Landung über Auslassventile Gas austritt und welches erste (1') und zweite (1) Kammern aufweist, die unabhängig voneinander mit Gas aufblasbar und gas-ablassbar sind, wobei die ersten Kammern (1') aufgrund einer angenommenen oder gemessenen Aufsetzrichtung festgelegt werden und die ersten Kammern (1') auf derjenigen Seite des Airbag-Landestoß-Dämpfungssystems gelegen sind, die in die Richtung der Aufsetzrichtung weist und die zweiten Kammern (1) auf der dieser Seite entgegengesetzt gelegen Seite des Airbag-Landestoß-Dämpfungssystems angeordnet sind, **dadurch gekennzeichnet, dass** aufgrund des Aufsetzens des Airbag-Landestoß-Dämpfungssystems in den ersten Kammern (1') ein höherer Gasdruck eingestellt wird als in den zweiten Kammern (1), indem vor den Aufsetzen alle Kammern im wesentlichen denselben Gasdruck aufweisen und über Auslassventile eine Verringerung des Drucks in den zweiten Kammen bewirkt wird.

2. Verfahren nach dem Anspruch 1, **dadurch gekennzeichnet, dass** die durch Sensoren bestimmte Aufsetzrichtung durch Steuerungsmittel beibehalten wird.

3. Verfahren nach einem der voranstehenden Ansprüche, **dadurch gekennzeichnet, dass** die Auslassventile der zweiten Kammern (1) beim Aufsetzen bei einem geringeren Überdruck als die Auslassventile der ersten Kammern (1') öffnen.

4. Verfahren nach einem der voranstehenden Ansprüche, **dadurch gekennzeichnet, dass** die Auslassventile der zweiten Kammern (1) zeitlich früher öffnen als die Auslassventile der ersten Kammern (1').

5. Verfahren nach einem der voranstehenden Ansprüche, **dadurch gekennzeichnet, dass** in den Auslassventilen der ersten Kammern (1') insgesamt eine kleinere Ausströmfläche vorgesehen ist als in den Auslassventilen der zweiten Kammern (1).

6. Verfahren nach Anspruch 5, **dadurch gekennzeichnet, dass** die Ausströmfläche durch die Anzahl von Auslassquerschnitten gesteuert wird.

7. Verfahren nach Anspruch 6, **dadurch gekennzeichnet, dass** die Ausströmfläche durch die Einstellung des Durchmessers der Auslassquerschnitte gesteuert wird.

8. Verfahren nach einem der voranstehenden Ansprüche, **dadurch gekennzeichnet, dass** zur Auslösung der Auslassventile Sensoren aus der Gruppe: Druckaufnehmer, Beschleunigungsaufnehmer und Berührungssensoren eingesetzt werden.

9. Verfahren nach einem der voranstehenden Ansprüche, **dadurch gekennzeichnet, dass** vor der Landung die ersten (1') und die zweiten Kammern (1) mit unterschiedlichen Gasen gefüllt werden, welche unterschiedliche Ausströmgeschwindigkeiten aufweisen.

10. Verfahren nach einem der voranstehenden Ansprüche, **dadurch gekennzeichnet, dass** ein Teil des Druckunterschiedes durch Zünden von Gasgeneratoren bewirkt wird, die den ersten Kammern (1') zugeordnet sind.

11. Verfahren nach einem der voranstehenden Ansprüche, **dadurch gekennzeichnet, dass** nach Erreichen der maximalen Kompressionsarbeit während des Aufsetzvorganges das Gas aus den ersten (1') und zweiten (1) Kammern durch Öffnen der Auslassventile ausströmt.

12. Airbag-Landestoß-Dämpfungssystem zur Verhinderung des Überschlagens bei der Landung eines Luft- oder Raumfahrtgerätes, welches vor der Landung mit Gas aufblasbar ist und aus dem während der Landung über Auslassventile Gas auslaßbar ist und welches erste (1') und zweite (1) Kammern aufweist, die unabhängig voneinander mit Gas aufblasbar und gas-ablassbar sind, wobei die ersten Kammern (1') aufgrund einer angenommenen oder gemessenen Aufsetzrichtung festgelegt sind und die ersten Kammern (1') auf derjenigen Seite des Airbag-Landestoß-Dämpfungssystems gelegen sind, die in die Richtung der Aufsetzrichtung weist und die zweiten Kammern (1) auf der dieser Seite entgegengesetzt gelegenen Seite des Airbag-Landestoß-Dämpfungssystems angeordnet sind, **dadurch gekennzeichnet, dass** Auslassventile vorgesehen sind, durch die während des Aufsetzens des Airbag-Landestoß-Dämpfungssystems in den ersten Kammern (1') ein höherer Gasdruck einstellbar ist als in den zweiten Kammern (1), indem vor dem Aufsetzen alle Kammern in wesentlichen denselben Gasdruck aufweisen und die Auslassventile eine Verringerung des Drucks in den zweiten Kammern bewirken.

13. Airbag-Ladestoß-Dämpfungssystem nach Anspruch 12, **dadurch gekennzeichnet, dass** Steuerungsmittel zur Beibehaltung der durch die Sensoren bestimmten Aufsetzrichtung vorgesehen sind.

14. Airbag-Ladestoß-Dämpfungssystem nach einem der voranstehenden Ansprüche 12 oder 13, **dadurch gekennzeichnet, dass** die Auslassventile derart eingestellt sind, daß die Auslassventile der zweiten Kammern (1) beim Aufsetzen bei einem geringeren Überdruck als die Auslassventile der ersten Kammern (1') öffnen.

15. Airbag-Ladestoß-Dämpfungssystem nach einem der voranstehenden Ansprüche 12 bis 14, **dadurch gekennzeichnet, dass** die Auslassventile derart eingestellt sind, daß die Auslassventile der zweiten Kammern (1) zeitlich früher öffnen als die Auslassventile der ersten Kammern (1').

16. Airbag-Ladestoß-Dämpfungssystem nach einem der voranstehenden Ansprüche 12 bis 15, **dadurch gekennzeichnet, dass** in den Auslassventilen der ersten Kammern (1') insgesamt eine kleinere Ausströmfläche vorgesehen ist als in den Auslassventilen der zweiten Kammern (1).

17. Airbag-Ladestoß-Dämpfungssystem nach Anspruch 16, **dadurch gekennzeichnet, dass** die Ausströmfläche durch die Anzahl von Auslassquerschnitten geregelt ist.

18. Airbag-Ladestoß-Dämpfungssystem nach Anspruch 17, **dadurch gekennzeichnet, dass** Steuerungsmittel vorgesehen sind, durch die die Ausströmfläche aufgrund der Einstellung des Durchmessers der Auslassquerschnitte geregelt ist.

19. Airbag-Ladestoß-Dämpfungssystem nach einem der voranstehenden Ansprüche 12 bis 18, **dadurch gekennzeichnet, dass** zur Auslösung der Auslassventile Sensoren aus der Gruppe: Druckaufnehmer, Beschleunigungsaufnehmer und Berührungssensoren installiert sind.

20. Airbag-Ladestoß-Dämpfungssystem nach einem der voranstehenden Ansprüche 12 bis 19, **dadurch gekennzeichnet, dass** vor der Landung die ersten (1') und die zweiten Kammern (1) mit unterschiedlichen Gasen gefüllt sind, welche unterschiedliche Ausströmgeschwindigkeiten aufweisen.

21. Airbag-Ladestoß-Dämpfungssystem nach einem der voranstehenden Ansprüche 12 bis 20, **dadurch gekennzeichnet, dass** Gasgeneratoren einen Teil des Druckunterschiedes bewirken, die den ersten Kammern (1') zugeordnet sind.

22. Airbag-Ladestoß-Dämpfungssystem nach einem der voranstehenden Ansprüche 12 bis 21, **dadurch gekennzeichnet, dass** Mittel vorgesehen sind, durch die nach Erreichen der maximalen Kompressionsarbeit während des Aufsetzvorganges das Gas aus den ersten (1') und zweiten (1) Kammern durch Öffnen der Auslassventile ausströmt.

23. Airbag-Ladestoß-Dämpfungssystem zur Verhinderung des Überschlagens bei der Landung eines Luft- oder Raumfahrtgerätes, welches vor der Landung mit Gas aufblasbar ist und aus dem während der Landung über Auslassventile Gas auslaßbar ist und welches erste (1') und zweite (1) Kammern aufweist, die unabhängig voneinander mit Gas aufblasbar und gas-ablassbar sind, wobei die ersten Kammern (1') aufgrund einer angenommenen oder gemessenen Aufsetzrichtung festgelegt sind und die ersten Kammern (1') auf derjenigen Seite des Airbag-Landestoß-Dämpfungssystems gelegen sind, die in die Richtung der Aufsetzrichtung weist und die zweiten Kammern (1) auf der dieser Seite entgegengesetzt gelegenen Seite des Airbag-Landestoß-Dämpfungssystems angeordnet sind, **dadurch gekennzeichnet, dass** vor der Landung der Gasdruck in den vorderen Kammern (1') sich auf einem höheren Wert befindet als in den hinteren Kammern (1).

**Claims**

1. Method for preventing an air or space travel device from overturning during landing by means of an airbag landing impact damping system which is inflated with gas before the landing and from which gas is discharged by way of outlet valves during the landing and which has first compartments (1') and second compartments (1) which can be inflated with gas and can discharge gas independently of each other, the first compartments (1') being defined on the basis of an assumed or measured touch-down direction and the first compartments (1') being located at the side of the airbag landing impact damping system that faces in the direction of the touch-down direction and the second compartments (1) being arranged at the side of the airbag landing impact damping system that is located opposite this side, **characterised in that**, as a result of the touch-down of the airbag landing impact damping system, a higher gas pressure is set in the first compartments (1') than in the second compartments (1) **in that**, before the touch-down, all of the chambers have substantially the same gas pressure and a reduction in the pressure in the second compartments is brought about by way of outlet valves.

2. Method according to claim 1, **characterised in that** the touch-down direction determined by sensors is maintained by control means.

3. Method according to either of the preceding claims, **characterised in that** the outlet valves of the second compartments (1) open at a lower elevated pressure than the outlet valves of the first compartments (1') during touch-down.

4. Method according to any one of the preceding claims, **characterised in that** the outlet valves of the second compartments (1) open at an earlier time than the outlet valves of the first compartments (1').

5. Method according to any one of the preceding claims, **characterised in that** in total a smaller discharge face is provided in the outlet valves of the first compartments (1') than in the outlet valves of the second compartments (1).

6. Method according to claim 5, **characterised in that** the discharge face is controlled by the number of outlet cross-sections.

7. Method according to claim 6, **characterised in that** the discharge face is controlled by the adjustment of the diameter of the outlet cross-sections.

8. Method according to any one of the preceding claims, **characterised in that** sensors from the group comprising pressure sensors, acceleration sensors and contact sensors, are used to actuate the outlet valves.

9. Method according to any one of the preceding claims, **characterised in that**, before the landing, the first compartments (1') and the second compartments (1) are filled with different gases which have different discharge speeds.

10. Method according to any one of the preceding claims, **characterised in that** a portion of the pressure difference is brought about by gas generators, which are associated with the first compartments (1'), being started up.

11. Method according to any one of the preceding claims, **characterised in that** the gas is discharged from the first compartments (1') and second compartments (1) by the outlet valves being opened after the maximum compression has been reached during the touch-down operation.

12. Airbag landing impact damping system for preventing an air or space travel device from overturning during landing, which system can be inflated with gas before the landing and from which gas can be discharged by way of outlet valves during the landing and which has first compartments (1') and second compartments (1) which can be inflated with gas and can discharge gas independently of each other, the first compartments (1') being defined on the basis of an assumed or measured touch-down direction and the first compartments (1') being located at the side of the airbag landing impact damping system that faces in the direction of the touch-down direction and the second compartments (1) being arranged at the side of the airbag landing impact damping system that is located opposite this side, **characterised in that** there are provided outlet valves, by which a higher gas pressure can be set in the first compartments (1'), during the touch-down of the airbag landing impact damping system, than in the second compartments (1) by all of the compartments having substantially the same gas pressure before the touch-down and the outlet valves bringing about a reduction in the pressure in the second compartments.

13. Airbag landing impact damping system according to claim 12, **characterised in that** control means are provided for maintaining the touch-down direction which is determined by the sensors.

14. Airbag landing impact damping system according to either of the preceding claims 12 or 13, **characterised in that** the outlet valves are set so that the outlet valves of the second compartments (1) open during touch-down at a lower elevated pressure than the outlet valves of the first compartments (1').

15. Airbag landing impact damping system according to any one of the preceding claims 12 to 14, **characterised in that** the outlet valves are set so that the outlet valves of the second compartments (1) open at an earlier time than the outlet valves of the first compartments (1').

16. Airbag landing impact damping system according to any one of the preceding claims 12 to 15, **characterised in that** in total a smaller discharge face is provided in the outlet valves of the first compartments (1') than in the outlet valves of the second compartments (1).

17. Airbag landing impact damping system according to claim 16, **characterised in that** the discharge face is controlled by the number of discharge cross-sections.

18. Airbag landing impact damping system according to claim 17, **characterised in that** there are provided control means, by which the discharge face is controlled based on the setting of the diameter of the outlet cross-sections.

19. Airbag landing impact damping system according to any one of the preceding claims 12 to 18, **characterised in that** sensors from the group comprising pressure sensors, acceleration sensors and contact sensors are installed in order to actuate the outlet valves.

20. Airbag landing impact damping system according to any one of the preceding claims 12 to 19, **characterised in that**, before the landing, the first compartments (1') and the second compartments (1) are filled with different gases which have different discharge speeds.

21. Airbag landing impact damping system according to any one of the preceding claims 12 to 20, **characterised in that** gas generators associated with the first compartments (1') bring about a portion of the pressure difference.

22. Airbag landing impact damping system according to any one of the preceding claims 12 to 21, **characterised in that** there are provided means by which the gas is discharged from the first compartments (1') and second compartments (1) by the outlet valves being opened after the maximum compression has been reached during the touch-down operation.

23. Airbag landing impact damping system for preventing an air or space travel device from overturning during landing, which system can be inflated with gas before the landing and from which gas can be discharged by way of outlet valves during the landing and which has first compartments (1') and second compartments (1) which can be inflated with gas and can discharge gas independently of each other, the first compartments (1') being defined on the basis of an assumed or measured touch-down direction and the first compartments (1') being located at the side of the airbag landing impact damping system that faces in the direction of the touch-down direction and the second compartments (1) being arranged at the side of the airbag landing impact damping system that is located opposite this side, **characterised in that**, before the landing, the gas pressure in the front compartments (1') is at a higher value than in the rear compartments (1).

**Revendications**

1. Procédé destiné à empêcher le capotage lors de l'atterrissage d'un engin aérien ou spatial à l'aide d'un système d'amortissement d'impact d'atterrissage à coussin à gaz, qui est gonflé avec du gaz avant l'atterrissage, et duquel du gaz s'échappe pendant l'atterrissage par l'intermédiaire de soupapes d'évacuation, et comportant des premiers compartiments (1') et des deuxièmes compartiments (1), qui peuvent être gonflés avec du gaz et desquels du gaz peut s'échapper indépendamment les uns des autres, les premiers compartiments (1') étant définis en raison d'un sens de prise de contact supposé ou mesuré, et les premiers compartiments (1') étant situés du côté du système d'amortissement d'impact d'atterrissage à coussin à gaz qui est orienté dans la direction du sens de prise de contact, alors que les deuxièmes compartiments (1) sont situés du côté opposé à ce côté du système d'amortissement d'impact d'atterrissage à coussin à gaz, **caractérisé en ce que**, en raison de la prise de contact du système d'amortissement d'impact d'atterrissage à coussin à gaz, une pression plus élevée est réglée dans les premiers compartiments (1') que dans les deuxièmes compartiments (1) car, avant la prise de contact, la même pression de gaz règne sensiblement dans tous les compartiments, et une réduction de la pression dans les deuxièmes compartiments est provoquée par des soupapes d'évacuation.

2. Procédé selon la revendication 1, **caractérisé en ce que** le sens de prise de contact déterminé par des capteurs est maintenu par des moyens de commande.

3. Procédé selon l'une des revendications précédentes, **caractérisé en ce que**, lors de la prise de contact, les soupapes d'évacuation des deuxièmes compartiments (1) s'ouvrent à une surpression plus faible que les soupapes d'évacuation des premiers compartiments (1').

4. Procédé selon l'une quelconque des revendications précédentes, **caractérisé en ce que** les soupapes d'évacuation des deuxièmes compartiments (1) s'ouvrent plus tôt dans le temps que les soupapes d'évacuation des premiers compartiments (1').

5. Procédé selon l'une quelconque des revendications précédentes, **caractérisé en ce que**, dans les soupapes d'évacuation des premiers compartiments (1'), il est prévu dans l'ensemble une surface de sortie d'écoulement plus petite que dans les soupapes d'évacuation des deuxièmes compartiments (1).

6. Procédé selon la revendication 5, **caractérisé en ce que** la surface de sortie d'écoulement est commandée par le nombre de sections transversales de sortie.

7. Procédé selon la revendication 6, **caractérisé en ce que** la surface de sortie d'écoulement est commandée par le réglage du diamètre des sections transversales de sortie.

8. Procédé selon l'une quelconque des revendications précédentes, **caractérisé en ce que** des capteurs choisis dans le groupe : des capteurs de pression, des capteurs d'accélération et des détecteurs de contact sont utilisés pour le déclenchement des soupapes d'évacuation.

9. Procédé selon l'une quelconque des revendications précédentes, **caractérisé en ce que,** avant l'atterrissage, les premiers compartiments (1') et les deuxièmes compartiments (1) sont remplis avec différents gaz ayant différentes vitesses d'écoulement.

10. Procédé selon l'une quelconque des revendications précédentes, **caractérisé en ce qu'**une partie de la différence de pression est provoquée par l'amorçage de générateurs de gaz, qui sont associés aux premiers compartiments (1').

11. Procédé selon l'une quelconque des revendications précédentes, **caractérisé en ce que,** après que le taux de compression maximal a été atteint pendant le processus de prise de contact, le gaz s'écoule des premiers compartiments (1') et des deuxièmes compartiments (1) par l'ouverture des soupapes d'évacuation.

12. Système d'amortissement d'impact d'atterrissage à coussin à gaz destiné à empêcher le capotage lors de l'atterrissage d'un engin aérien ou spatial, lequel peut être gonflé avec du gaz avant l'atterrissage, et duquel du gaz peut s'échapper pendant l'atterrissage par l'intermédiaire de soupapes d'évacuation, et comportant des premiers compartiments (1') et des deuxièmes compartiments (1), qui peuvent être gonflés avec du gaz et desquels du gaz peut s'échapper indépendamment les uns des autres, les premiers compartiments (1') étant définis en raison d'un sens de prise de contact supposé ou mesuré, et les premiers compartiments (1') étant situés du côté du système d'amortissement d'impact d'atterrissage à coussin à gaz qui est orienté dans la direction du sens de prise de contact, alors que les deuxièmes compartiments (1) sont situés du côté opposé à ce côté du système d'amortissement d'impact d'atterrissage à coussin à gaz, **caractérisé en ce qu'**il est prévu des soupapes d'évacuation, par l'intermédiaire desquelles une pression plus élevée peut être réglée dans les premiers compartiments (1') que dans les deuxièmes compartiments (1) pendant la prise de contact du système d'amortissement d'impact d'atterrissage à coussin à gaz car, avant la prise de contact, la même pression de gaz règne sensiblement dans tous les compartiments, et les soupapes d'évacuation provoquent une réduction de la pression dans les deuxièmes compartiments.

13. Système d'amortissement d'impact d'atterrissage à coussin à gaz selon la revendication 12, **caractéri-**

**sé en ce que** des moyens de commande sont prévus pour le maintien du sens de prise de contact déterminé par les capteurs.

14. Système d'amortissement d'impact d'atterrissage à coussin à gaz selon l'une des revendications précédentes 12 ou 13, **caractérisé en ce que** les soupapes d'évacuation sont réglées de telle sorte que, lors de la prise de contact, les soupapes d'évacuation des deuxièmes compartiments (1) s'ouvrent à une surpression plus faible que les soupapes d'évacuation des premiers compartiments (1').

15. Système d'amortissement d'impact d'atterrissage à coussin à gaz selon l'une quelconque des revendications précédentes 12 à 14, **caractérisé en ce que** les soupapes d'évacuation sont réglées de telle sorte que les soupapes d'évacuation des deuxièmes compartiments (1) s'ouvrent plus tôt dans le temps que les soupapes d'évacuation des premiers compartiments (1').

16. Système d'amortissement d'impact d'atterrissage à coussin à gaz selon l'une quelconque des revendications précédentes 12 à 15, **caractérisé en ce que,** dans les soupapes d'évacuation des premiers compartiments (1'), il est prévu dans l'ensemble une surface de sortie d'écoulement plus petite que dans les soupapes d'évacuation des deuxièmes compartiments (1).

17. Système d'amortissement d'impact d'atterrissage à coussin à gaz selon la revendication 16, **caractérisé en ce que** la surface de sortie d'écoulement est réglée par le nombre de sections transversales de sortie.

18. Système d'amortissement d'impact d'atterrissage à coussin à gaz selon la revendication 17, **caractérisé en ce qu'**il est prévu des moyens de commande, par l'intermédiaire desquels la surface de sortie d'écoulement est réglée en raison du réglage du diamètre des sections transversales de sortie.

19. Système d'amortissement d'impact d'atterrissage à coussin à gaz selon l'une quelconque des revendications précédentes 12 à 18, **caractérisé en ce que** des capteurs choisis dans le groupe : des capteurs de pression, des capteurs d'accélération et des détecteurs de contact sont installés pour le déclenchement des soupapes d'évacuation.

20. Système d'amortissement d'impact d'atterrissage à coussin à gaz selon l'une quelconque des revendications précédentes 12 à 19, **caractérisé en ce que**, avant l'atterrissage, les premiers compartiments (1') et les deuxièmes compartiments (1) sont remplis avec différents gaz ayant différentes vitesses d'écoulement.

21. Système d'amortissement d'impact d'atterrissage à coussin à gaz selon l'une quelconque des revendications précédentes 12 à 20, **caractérisé en ce que** des générateurs de gaz, qui sont associés aux premiers compartiments (1'), provoquent une partie de la différence de pression.

22. Système d'amortissement d'impact d'atterrissage à coussin à gaz selon l'une quelconque des revendications précédentes 12 à 21, **caractérisé en ce qu'**il est prévu des moyens, par l'intermédiaire desquels le gaz s'écoule des premiers compartiments (1') et des deuxièmes compartiments (1) par l'ouverture des soupapes d'évacuation après que le taux de compression maximal a été atteint pendant le processus de prise de contact.

23. Système d'amortissement d'impact d'atterrissage à coussin à gaz destiné à empêcher le capotage lors de l'atterrissage d'un engin aérien ou spatial, lequel peut être gonflé avec du gaz avant l'atterrissage, et duquel du gaz peut s'échapper pendant l'atterrissage par l'intermédiaire de soupapes d'évacuation, et comportant des premiers compartiments (1') et des deuxièmes compartiments (1), qui peuvent être gonflés avec du gaz et desquels du gaz peut s'échapper indépendamment les uns des autres, les premiers compartiments (1') étant définis en raison d'un sens de prise de contact supposé ou mesuré, et les premiers compartiments (1') étant situés du côté du système d'amortissement d'impact d'atterrissage à coussin à gaz qui est orienté dans la direction du sens de prise de contact, alors que les deuxièmes compartiments (1) sont situés du côté opposé à ce côté du système d'amortissement d'impact d'atterrissage à coussin à gaz, **caractérisé en ce que,** avant l'atterrissage, la pression de gaz dans les compartiments avant (1') est à une valeur supérieure que dans les compartiments arrière (1).

# Fig.1

# Fig.2

# Fig.3